# EUROPÄISCHE PATENTANMELDUNG

(11) **EP 0 612 582 A2**
(43) Veröffentlichungstag der Anmeldung: **31.08.1994**
(21) Anmeldenummer: 94102382.2
(22) Anmeldetag: 17.02.1994
(51) Int. Cl.: B23Q 7/14, E01B 7/00, E01B 25/26

(54) **Längstransfersystem**

(30) Priorität: 20.02.1993 DE 4305347
(71) Anmelder: Montech AG, CH-4552 Derendingen (CH)
(72) Erfinder: Grossenbacher, Erich,, CH-4552 Derendingen (CH); Trenner, Albrecht,, CH-4513 Langendorf (CH)
(74) Vertreter: Weiss, Peter, Dr. rer. nat.

(57) **Zusammenfassung**

Bei einem Längstransfersystem mit einem Umlauf (1) aus zumindest einem Schienenstrang zum Führen eines Werkstückträgers (2) zu zumindest einer Bearbeitungsstation (3) ist die Bearbeitungsstation (3) an einem By-Pass (4) angeordnet, der über Weichen (5, 6; 5a, 6a) mit dem Umlauf (1) verbunden ist. Dabei soll dem By-Pass (4) an der Bearbeitungsstation (3) ein zweiter By-Pass (8) zum Führen eines Materialträgers (7) zur Bearbeitungsstation (y) zugeordnet sein.

## Beschreibung

Die Erfindung betrifft ein Längstransfersystem mit einem Umlauf aus zumindest einem Schienenstrang zum Führen eines Werkstückträgers zu zumindest einer Bearbeitungsstation, wobei die Bearbeitungsstation an einem By-Pass angeordnet ist, der über Weichen mit dem Umlauf verbunden ist.

Unternehmen im heutigen internationalen Wettbewerb müssen ihre Produktivität verbessern und Durchlaufzeiten reduzieren. D.h., Produkte müssen einerseits kostengünstiger gefertigt und montiert werden und andererseits schneller in der Fabrikation umgesetzt werden. Dementsprechend müssen die Produktionsabläufe automatisiert und verknüpft werden. Die Verknüpfung von Fertigungsprozessen/Montageoperationen spielt eine bedeutende Rolle in der modernen Fabrikation.

Bei der hohen Anforderung an die Anpassungsfähigkeit von sich verändernden Produktionsfaktoren kommen heute im wesentlichen Längstransfersysteme zur Anwendung, welche aus Schienensträngen bestehen, auf denen die zu bearbeitenden Werkstücke von Bearbeitungsstation zu Bearbeitungsstation automatisch transportiert werden. Diese Schienenstränge bilden einen Umlauf, wobei sich die entsprechenden Bearbeitungsstationen entlang dem Umlauf gruppieren. Nachteilig wirkt sich dabei aus, dass sich die Montagestationen in einer Reihe befinden, so dass sich die Taktzeit, mit der die Werkstückträger transportiert werden, nach der langsamsten Montageoperation richtet. Eine parallele Montage ist nicht möglich.

Aus diesem Grunde wurde ein By-Pass-System emtwickelt, wobei in einem By-Pass in der Bearbeitungsstation der Werkstückträger aus dem Umlauf ausgeschleust, bearbeitet und wieder dem Umlauf zugeführt wird. Mit diesem By-Pass-System werden Parallelabläufe möglich. Zudem wird beim Ausfall einer Montagestation nicht der ganze Umlauf blokkiert.

Der vorliegenden Erfindung liegt die Aufgabe zugrunde, bei einem Längstransfersystem der o.g. Art noch einen höheren Automatisierungsgrad zu erzielen und insbesondere auch den Materialtransport zu den Bearbeitungsstationen zu verbessern.

Zur Lösung dieser Aufgabe führt, dass dem By-Pass an der Bearbeitungsstation ein zweiter By-Pass zum Führen eines Materialträgers zur Bearbeitungsstation zugeordnet ist.

Durch diesen "doppelten" By-Pass wird ein sehr hoher Automationsgrad erreicht. Ein zusätzliches Beschicken der Bearbeitungsstationen mit Material entfällt. Das Rüsten von Material erfolgt an einer beliebigen Stelle des Umlaufes. Die Materialträger erhalten die jeweilige Codierung und werden in den Umlauf eingeschleust. Dabei kann die Verwaltung des Flusses der Werkstückträger und der Materialträger von einer autonomen Steuerung an den jeweiligen Bearbeitungsstationen oder von einer zentralen Steuerung übernommen werden. Das Material wird auf demselben Umlauf zu den Bearbeitungsstationen geführt, so dass kein zusätzlicher Platzbedarf notwendig ist.

Ein wesentliches Element des Längstransfersystems mit By-Pass stellt die Weiche dar, da diese reibungslos funktionieren muss und nur sehr wenig Platz in Anspruch nehmen darf. Bei den bislang bekannten Weichen in diesen Systemen waren zumindest zwei Schienenabschnitte auf einem Drehteller angeordnet, wobei jeder Schienenabschnitt der Verbindung von Schienensträngen diente. Dies war ein zusätzlicher Aufwand, der zudem zusätzlichen Platz für die Anordnung von zwei Schienenabschnitten benötigte.

Gemäss der vorliegenden Erfindung soll dagegen der Umlauf mit zwei Schienensträngen zu der Weiche hin gekrümmt ausgebildet sein, wobei ein dazu gegenläufig gekrümmter, um einen Mittelpunkt drehbarer Schienenabschnitt die Schienenstränge miteinander verbindet. D.h., auch bei einem Transport beispielsweise eines Werkstückträgers durch die Weichen hindurch ohne Abzweigung in einen By-Pass läuft der Werkstückträger auf dem gekrümmten Schienenabschnitt.

Damit dies möglichst reibungslos funktioniert, sollten die Mittelachspunkte von Mittelachsen der Schienenstränge um den Mittelpunkt um 120° gedreht angeordnet sein. Dann bietet es sich auch an, den dritten Schienenstrang jeweils ebenfalls um 120° um den Mittelpunkt versetzt anzuordnen. Bei einer Drehung des Schienenabschnittes jeweils um 120° können so jeweils zwei gewünschte Schienensträge miteinander verbunden werden.

Bevorzugt sitzt der Schienenabschnitt ebenfalls auf einem Drehteller. Dieser kann relativ klein gehalten werden, da der Schienenabschnitt nur einen geringen Platz in Anspruch nimmt.

Für einen reibungslosen Transport eines Trägers erweist es sich als günstig, wenn die Krümmung der Schienenstränge so erfolgt, dass deren Mittelachsen etwa senkrecht auf den Umfang des Drehtellers auftreffen. Damit wird ein möglichst gradflächiger Übergang von Schienenstrang zu Schienenabschnitt gewährleistet.

Der Drehteller ist mit einem Antrieb verbunden, wobei sich hier ein Pneumatikzylinder anbietet. Dieser Pneumatikzylinder kann einerseits ortsfest über ein Drehgelenk festgelegt werden, während er andererseits exzentrisch mit dem Drehteller verbunden ist. Bei einem Ausstossen der Kolbenstange aus dem Pneumatikzylinder erfolgt dann ein Drehen des Drehtellers.

Bei einem anderen Ausführungsbeispiel der Erfindung ist ein Kolben eines Pneumatikzylinders als Zahnstange mit beidseitigen Kolben und entsprechenden Druckräumen ausgebilde. Die Zahnstange greift in ein auf einer Ritzelwelle sitzendes Zahnritzel eingreift. Mit der Ritzelwelle oder einem auf der Ritzelwelle aufsitzenden Bund ist auch der Drehteller verbunden. Ferner ist der zylinderförmige Pneumatikantrieb mit einem Grundkörper der Weiche verbunden.

Wird dieser Pneumatikantrieb kann je nach Speisung der Druckräume vor dem entsprechenden Kolben der Drehteller im oder gegen den Uhrzeigersinn bewegt werden.

Um Verletzungsgefahren beim Drehen des Drehtellers vorzubeugen, ist ferner eine Drehtellerverriegelung in den Endlagen vorgesehen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Fig. 1 eine schematische Darstellung eines erfindungsgemässen Längstransfersystems;
Fig. 2 eine Draufsicht auf eine erfindungsgemässe Weiche;
Fig. 3 eine teilweise aufgebrochen dargestellte Seitenansicht der Weiche gem. Fig. 2.
Fig. 4 eine Draufsicht auf ein weiteres Ausführungsbeispiel einer erfindungsgemässen Weiche;
Fig. 5 eine teilweise aufgebrochen dargestellte Seitenansicht der Weiche gem. Figur 4;
Fig. 6 ein Längsschnitt durch einen Pneumatikantrieb verwendet bei einer Weiche gem. Figur 5;
Fig. 7 eine weitere Seitenansicht der Weiche gem Figur 4;
Fig. 8 einen Teilschnitt durch einen Drehteller im Bereich einer Drehtellerverriegelung entlang Linie V - V in Figur 4;

Ein erfindungsgemässes Längstransfersystem R weist einen geschlossenen Umlauf 1 auf, welcher in der Regel aus zumindest einem Schienenstrang besteht. Auf diesem Umlauf 1 bewegen sich oder werden bewegt Werkstückträger 2, mittels denen ein zu bearbeitendes Werkstück von einer Bearbeitungsstation zur anderen und zu einer Be- und Entladestation gebracht wird. Im vorliegenden Ausführungsbeispiel ist nur eine Bearbeitungsstation 3 schematisch angedeutet.

Der Werkstückträger 2 fährt über die Weichen 5 und 5a in die Bearbeitungsposition 3, wo er während der Bearbeitung der auf ihm befindlichen Werkstücke stehen bleibt. Damit können nachfolgende Werkstückträger im Umlauf 1 über die Strecke x weitertransportiert werden. Nach der Bearbeitung gelangt der Werkstückträger 2 über die Weichen 6a und 6 in den Umlauf 1 zurück.

Erfindungsgemäss wird allerdings auf dem Umlauf 1 auch ein Materialträger 7 geführt, über welchen notwendiges Material in die Nähe der Bearbeitungsstation gebracht wird. Dies können beispielsweise Einzelteile sein, die automatisch montiert werden. Die Bewegungsrichtungen der Materialträger 7 und der Werkstückträger 2 sind im übrigen durch die nicht näher gekennzeichneten Pfeile angedeutet.

Der Materialträger 7 fährt über die Weichen 5 und 5a in den By-pass 8 und hält auf der Position y an. Dadurch können nachfolgende Werkstückträger 2 oder Materialträger 7 im Umlauf 1 über die Strecke x weitertransportiert werden. Ist sämtliches Material des Materialträgers 7 verbraucht, gelangt dieser über die Weichen 6a und 6 in den Umlauf 1 zurück.

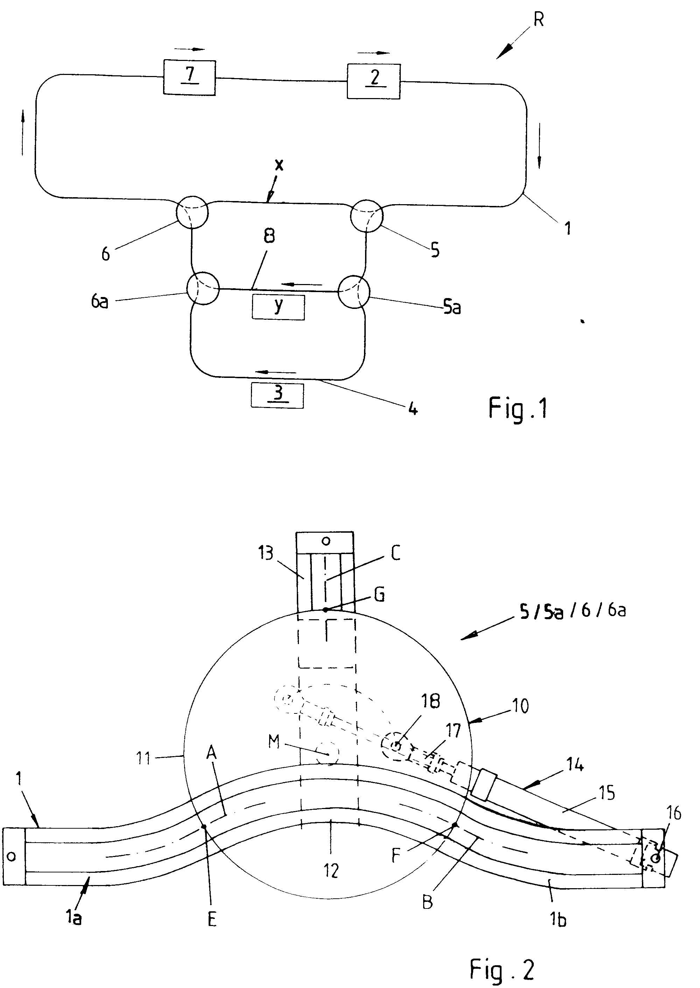

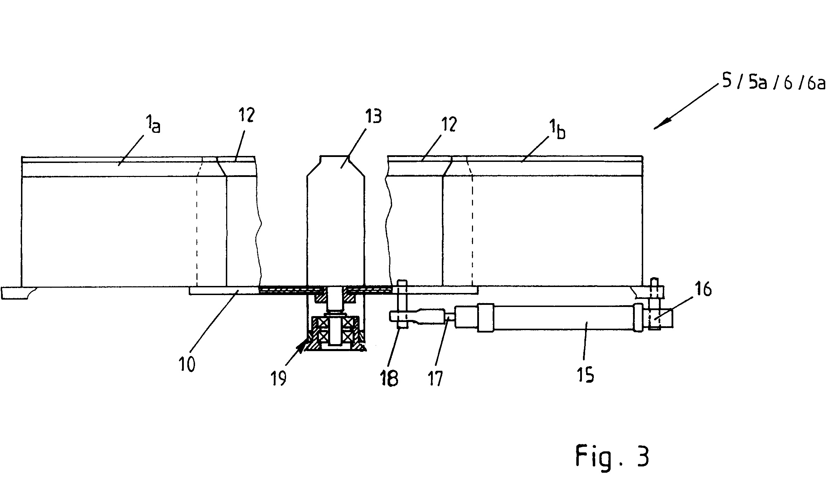

In den Figuren 2 und 3 ist eine erfindungsgemässe Weiche 5/6, 5a/6a gezeigt. Ein gerader Schienenstrang la des Umlaufes 1 ist von einem Drehteller 10 unterbrochen. Dabei wird der Schienenstrang la zum Umfang 11 des Drehtellers 10 so hingebogen, dass eine Mittelachse A des Schienenstranges 1a in etwa rechtwinklig auf den Umfang 11 des Drehtellers 10 auftrifft.

Auf dem Drehteller 10 ist dem Schienenstrang 1a ein Schienenabschnitt 12 zugeordnet, welcher bogenförmig verläuft und zu einem anschliessenden Schienenstrang 1b führt, wobei auch dessen Achse B wieder etwa rechtwinklig auf den Umfang 11 des Drehtellers 10 auftrifft. Ein Mittelachspunkt E der Mittelachse A auf dem Umfang 11 liegt um 120° versetzt bzw. gedreht um einen Mittelpunkt M des Drehtellers 10 zu einem Mittelachspunkt F der Mittelachse B auf dem Umfang 11. Dies gilt auch für einen weiteren Mittelachspunkt G einer Mittelachse C eines weiteren Schienenstranges 13. Wird nun der Drehteller 10 im Mittelpunkt M um 120° im Uhrzeigersinn gedreht, werden die Schienenstränge 13 und 1a durch den Schienenabschnitt 12 verbunden. Erfolgt die Drehung des Drehtellers 10 um 120° im Gegenuhrzeigersinn, werden dadurch die Schienenstränge 13 und 1b durch den Schienenstrang 12 verbunden.

Das Drehen des Drehtellers 10 kann beispielsweise gemäss den Figuren 2 und 3 mittels eines Pneumatikantriebes 14 geschehen, wobei ein Zylinder 15 über ein Drehgelenk 16 unterhalb des Schienenstranges 1b festgelegt ist. Eine Kolbenstange 17, welche aus dem Zylinder 15 fährt, ist über ein weiteres Drehgelenk 18 exzentrisch zum Mittelpunkt M des Drehtellers 10 mit diesem verbunden. Diese Verbindung erfolgt so, dass bei einem gestrichelt angedeuteten Ausstossen der Kolbenstange 17 die Drehung des Drehteller 10 um 120° vollzogen wird.

In Fig. 3 ist im übrigen gezeigt, dass der Drehteller 10 auf einem Drehlager 19 aufsitzen kann, welches handelsüblich und deshalb nicht näher beschrieben ist.

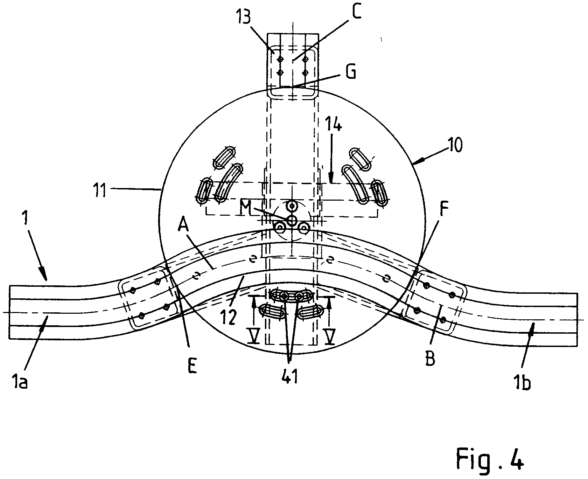

Das Drehen des Drehtellers 10 kann auch durch ein zweites Ausführungsbeispiel eines Pneumatikantriebes 14a gemäss den Figuren 4 bis 8 geschehen, der im wesentlichen aus einem Zylinderrohr 15 mit beidseitigen Verschlussdeckeln 16, einer darin angeordneten Zahnstange 17 sowie zwei mit der Zahnstange 17 verbundenen Kolben 18 besteht.

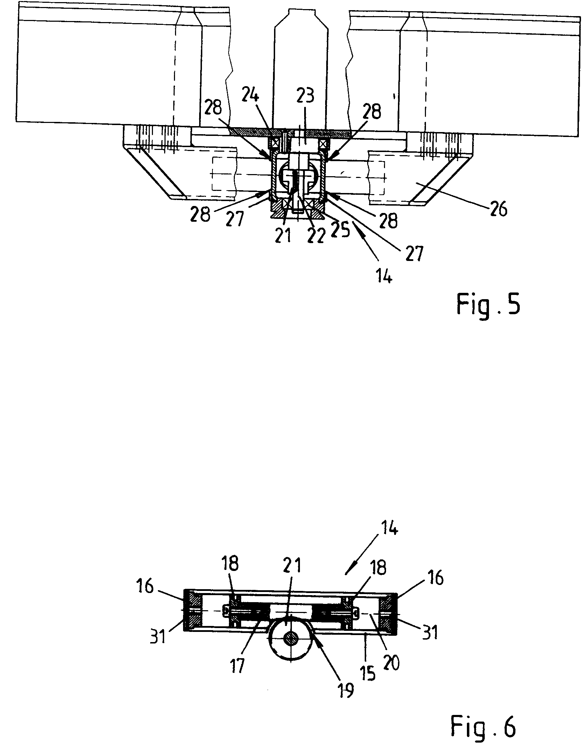

Der Zylinder 15 ist etwa in seiner Mitte (siehe Figur 6) durch eine halbzylinderförmige Aussparung 19, welche quer zu einer Zylinderachse 20 verläuft, geöffnet, so dass ein unter dem Drehteller angeordnetes Zahnritzel 21 in die Zahnstange 17 eingreifen kann. Das Zahnritzel 21 sitzt auf einer Ritzelwelle 22, die wiederum mit einem Bund 23 in einem Wälzlager 24 aufgenommen ist. Auf einer Stirnfläche des Bundes 23 sitzt der Drehteller 10 auf (siehe Figur 5). Ein dem Bund 23 gegenüberliegendes Ende der Ritzelwelle 22 ist in einem weiteren Wälzlager 25 gehalten.

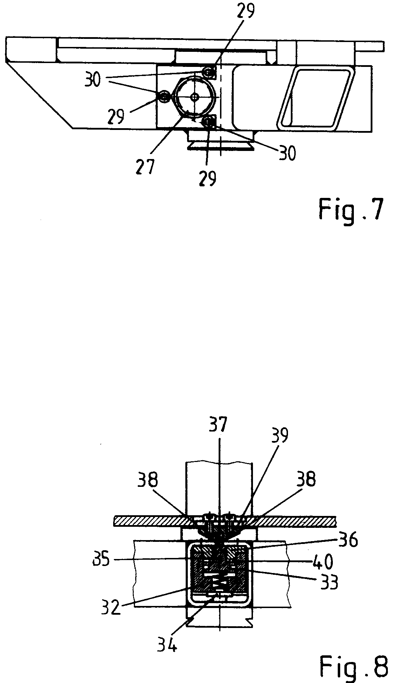

Beide Wälzlager 23 und 24 und auch das gesamte Zylinderrohr 15 mit Inhalt sind in einem Grundkörper 26 angeordnet. Dabei durchdringt das Zylinderrohr 15 den Grundkörper 26 und wird durch zwei Haltebleche 27, welche in Schlitze 28 eingreifen sowohl in axialer als auch in radialer Richtung gesichert. Gemäss Figur 7 sind die Haltebleche 27 mit je drei Schrauben 29 am Grundkörper 26 festgelegt. Dabei durchdringen die Schrauben 29 Langlöcher 30 in den Halteblechen 27, so dass der Pneumatikantrieb radial verstellt werden kann, was ein exaktes Einstellen des Zahnspiels zwischen Zahritzel 21 und Zahnstange 17 erlaubt.

Wird der Pneumatikantrieb 14a an Anschlüssen 31 mit Druckluft gespeist, so dreht sich der Drehteller 10 um 120° vorwärts oder rückwärts.

Aus Sicherheitsgründen (Quetschgefahr beim Einschwenken des Schienenabschnitts 12 in die Schienenstränge la und 13 oder 1b und 13 bzw. la und 16) darf die Antriebskraft des Pneumatikantriebes 14a nur gering sein. Als Folge davon muss der Drehteller 10 in seinen Endlagen verriegelt werden. Dies geschieht durch eine in Figur 8 dargestellt Drehtellerverriegelung. Sie besteht aus einem Zylinder 32, einem Kolben 33, der sich auf einer Druckfeder 34 abstützt, und dessen Kolbenstange 35, welche einen ringförmigen Zylinderdeckel 36 durchfährt. Ein oberer Teil der Kolbenstange ist als Riegel 37 ausgebildet, dessen beide parallelen Flächen 38 in einen geschlitzten Halter 39 eingreifen, wenn der Kolben 33 drucklos ist und der Riegel 37 in einer kreisförmigen Bewegung vom Halter 39 überfahren wird. Schrauben 41 zum Festlegen des Halters 39 an dem Drehteller 10 sind in Figur 4 erkennbar.

Die Entriegelung des Halters 39 vom Riegel 37 erfolgt durch Einspeisung von Druckluft in einen oberen Zylinderraum 40.

## Patentansprüche

1. Längstransfersystem mit einem Umlauf (1) aus zumindest einem Schienenstrang zum Führen eines Werkstückträgers (2) zu zumindest einer Bearbeitungsstation (3), wobei die Bearbeitungsstation (3) an einem By-Pass (4) angeordnet ist, der über Weichen (5, 6; 5a, 6a) mit dem Umlauf (1) verbunden ist,
dadurch gekennzeichnet,
dass dem By-Pass (4) an der Bearbeitungsstation (3) ein zweiter By-Pass (8) zum Führen eines Materialträgers (7) zur Bearbeitungsstation (y) zugeordnet ist.

2. Längstransfersystem mit einem Umlauf (1) aus zumindest einem Schienenstrang zum Führen eines Werkstückträgers (2) zu zumindest einer Bearbeitungsstation (3), wobei die Bearbeitungsstation (3) an einem By-Pass (4) angeordnet ist, der über Weichen (5, 6; 5a, 6a) mit dem Umlauf (1) verbunden ist, dadurch gekennzeichnet, dass der Umlauf (1) mit zwei Schienensträngen (1a und 1b) zu den Weichen (5 und 6) hin gekrümmt ausgebildet ist, wobei ein dazu gegenläufig gekrümmter, um einen Mittelpunkt (M) drehbarer Schienenabschnitt (12) die Schienenstränge (1a und 1b) miteinander verbindet.

3. Längstransfersystem nach Anspruch 2, dadurch gekennzeichnet, dass die Mittelachspunkte (E und F) von Mittelachsen (A und B) der Schienenstränge (1a und 1b) um den Mittelpunkt (M) um 120° gedreht angeordnet sind.

4. Längstranfersystem nach Anspruch 3, dadurch gekennzeichnet, dass ein dritter Schienenstrang (13) mit einem Mittelachspunkt (G) ebenfalls um 120° um den Mittelpunkt (M) versetzt angeordnet ist.

5. Längstransfersystem nach einem der Anprüche 2 - 4, dadurch gekennzeichnet, dass der Schienenabschnitt (12) auf einem Drehteller (10) aufsitzt, welcher um den Mittelpunkt (M) dreht.

6. Längstransfersystem nach Anspruch 5, dadurch gekennzeichnet, dass die Mittelachsen (A, B, C) der Schienenstränge (1a, 1b und 13) in etwa senkrecht auf einen Umfang (11) des Drehtellers (10) auftreffen.

7. Längstransfersystem nach Anspruch 5 oder 6, dadurch gekennzeichnet, dass dem Drehteller (10) ein Antrieb (14,14a) zugeordnet ist.

8. Längstransfersystem nach Anspruch 7, dadurch gekennzeichnet, dass der Drehteller (10) exzentrisch zum Mittelpunkt (M) mit einem Antrieb (14) verbunden ist.

9. Längstransfersystem nach Anspruch 8, dadurch gekennzeichnet, dass der Antrieb aus einem Pneumatikzylinder (15) besteht, welcher einends ortsfest über ein Drehgelenk (16) fixiert und andernends über eine Kolbenstange (17) und ein weiteres Drehgelenk (18) mit dem Drehteller (10) verbunden ist.

10. Längstransfersystem nach Anspruch 7, dadurch gekennzeichnet, dass der Drehteller (10) mit einer Ritzelwelle (22) verbunden ist, auf der ein Zahnritzel (21) aufsitzt, welches in eine Zahnstange (17) eingreift.

11. Längstransfersystem nach Anspruch 10, dadurch gekennzeichnet, dass an die Zahnstange (17) beidends je ein Kolben (18) anschliesst, wobei Zahnstange (17) und Kolben (18) in einem Zylinderrohr (15) sitzen.

12. Längstransfersystem nach Anspruch 11, dadurch gekennzeichnet, dass das Zylinderrohr (15) beidends durch Deckel (16) verschlossen ist, welche Anschlüsse (31) an eine Druckluftquelle aufweisen.

13. Längstransfersystem nach Anspruch 11 oder 12, dadurch gekennzeichnet, dass das Zylinderrohr (15) eine halbzylinderförmige Ausnehmung (19) aufweist, durch welche das Zahnritzel (21) mit der Zahnstange (17) in Eingriff gelangt.

14. Längstransfersystem nach wenigstens einem der Ansprüche 7 bis 13, dadurch gekennzeichnet, dass dem Drehteller (10) eine Drehtellerverriegelung zugeordnet ist.

15. Längstransfersystem nach Anspruch 14, dadurch gekennzeichnet, dass am Drehteller (10) ein geschlitzter Halter (39) angeordnet ist, in den ein von einer Druckfeder (34) beaufschlagter Riegel (39) eingreift.

16. Längstransfersystem nach Anspruch 15, dadurch gekennzeichnet, dass der Riegel (39) ein Teil einer Kolbenstange (35) ist, welche mit einem Kolben (33) in einem Zylinder (32) in Verbindung steht, wobei der Kolben (32) einerseits von der Feder (34) und andererseits von Druckluft in einem Druckraum (40) beaufschlagbar ist.
